# EUROPEAN PATENT APPLICATION

(11) **EP 1 959 374 A1**
(43) Date of publication of application: **20.08.2008**
(21) Application number: 07102644.7
(22) Date of filing: 19.02.2007
(51) Int. Cl.: G06K 7/10, G06K 19/06

(54) **Multi-dimensional bar code, apparatus and method for reading the same and method for generating the same**

(71) Applicant: Cronto Limited, 43 Bosworth Road Cambridge, Cambridgeshire CB1 8RG (GB)
(72) Inventor: Drokov, Igor, Cambridge, CB1 8RG (GB); Punskaya, Elena, Cambridge, CB1 8RG (GB)
(74) Representative: Haley, Stephen

(57) **Abstract**

A multi-dimensional bar code comprises one or more colour regions, the one or more colour regions representing encoded data and being arranged to provide light having a parameter value that exceeds a predetermined threshold value. The bar code further comprises one or more identification regions arranged to provide light having a parameter value that does not exceed the predetermined threshold value. The one or more identification regions are distinguished, upon the application of threshold processing, from the one or more colour regions, so that the bar code is identifiable by an apparatus for reading the bar code. An apparatus and method for reading a multi-dimensional bar code, and a method of generating a multi-dimensional bar code are also provided.

## Description

The present invention relates to a multi-dimensional bar code and an apparatus and method for reading such a bar code. The present invention also relates to a method of generating such a bar code.

Bar codes are well known in the art and have been used for many years to assist in the handling and identification of a wide variety of objects.

A traditional bar code comprises a line of plural bars of two differing colours arranged in a single reading direction. Variations in the spacing and thickness of the individual bars in the reading direction are detected by a reading device to determine data represented by the bar code which can then be used to identify the object associated with the bar code.

Such bar codes have considerable benefits, but also have limitations in terms of the amount of information that they can contain. This means that they are difficult to use for the conveyance of anything other than a single product identity code. In view of this, in recent years there have been developments on the basic bar code format to introduce variations in the bar code in two reading directions. The introduction of a second reading dimension enables a considerable amount of additional information to be conveyed by the bar code as there can be variations in the image generated by the bar code in both directions.

However, such bar codes have been originally designed for industrial dedicated scanners and their structure is such that it is more difficult to ensure accurate reading of them without the employment of more sophisticated and, generally, more expensive reading equipment. The relatively poor image quality of inexpensive camera optics determines the minimal size of code features that can be reliably recognised, which means that for a limited available area, the amount of data that can be carried even by a two-dimensional bar code is limited. The capacity of the code can be further increased by introducing colour as a code feature, however, varying lighting conditions impose further restrictions and challenges due to large differences in colour values. Reference colour regions can be introduced to overcome this problem, however, they are only useful once alignment references of the bar code have been accurately identified. Furthermore, with two-dimensional bar codes, it is always necessary to employ relatively complex image processing algorithms to read them in order to extract the alignment images from the data carrying images. This means that it can be difficult to employ or produce a device at low cost with very simple optical reading systems and which has limited processing capability, which can still read even slightly higher capacity bar codes quickly and reliably.

The present invention seeks to overcome some of these problems.

According to the present invention there is provided a multi-dimensional bar code comprising:
one or more colour regions, said one or more colour regions representing encoded data and being arranged to provide light having a parameter value that exceeds a predetermined threshold value; and
one or more bar code identification regions arranged to provide light having a parameter value that does not exceed the predetermined threshold value,
such that the one or more identification regions are distinguished, upon the application of threshold processing, from the one or more colour regions, so that the bar code is identifiable by an apparatus for reading the bar code.

Preferably, the multi-dimensional bar code comprises one or more orientation regions arranged to provide light such that they are distinguished, upon the application of orientation processing, from any remaining regions of the bar code, so that the relative orientation of the bar code and an apparatus for reading the bar code can be determined.

One or more of the orientation regions may be one or more of the identification regions.

One or more of the orientation regions may be one or more of the colour regions.

The parameter may be at least one of light intensity, wavelength, reflectance and contrast.

The aspect ratio of the bar code is preferably substantially 1:1.

The bar code further may comprise one or more distortion correction reference regions.

The bar code may comprise one or more light intensity reference regions.

The bar code may comprise one or more colour reference regions.

Preferably, the one or more identification regions define at least one edge of the bar code.

According to the present invention there is further provided an apparatus for reading a multi-dimensional bar code as defined above, the apparatus comprising:
image capturing means arranged to capture an image of the bar code;
threshold processing means arranged to apply threshold processing to the bar code, in order to detect the one or more identification regions;
identification processing means arranged to identify, based on an outcome of the threshold processing, the bar code; and
decoding means arranged to decode the bar code.

The apparatus preferably comprises orientation processing means arranged to detect the one or more orientation regions and to determine a relative orientation of the bar code to the apparatus.

The present invention further provides a method of reading a multi-dimensional bar code as defined above, the method comprising the steps of:
capturing an image of the bar code;
applying threshold processing to the bar code, in order to detect the one or more identification regions;
applying identification processing to identify, based on an outcome of the threshold processing, the bar code; and
decoding the bar code.

The above method of reading the bar code preferably comprises the steps of:
applying orientation processing to detect the one or more orientation regions and to determine a relative orientation of the bar code to an apparatus for reading the bar code.

The present invention further provides a method of generating a multi-dimensional bar code, the method comprising the steps of:
generating one or more colour regions, said one or more colour regions representing encoded data and being arranged to provide light having a parameter value that exceeds a predetermined threshold value; and
generating one or more identification regions arranged to provide light having a parameter value that does not exceed the predetermined threshold value,
such that the one or more identification regions are distinguished from the one or more colour regions, so that the bar code can be identified.

The above method of generating a multi-dimensional bar code preferably comprises the step of:
generating one or more orientation regions arranged to provide light such that they are distinguished, upon the application of orientation processing, from any remaining regions of the bar code, so that the relative orientation of the bar code and an apparatus for reading the bar code can be determined.

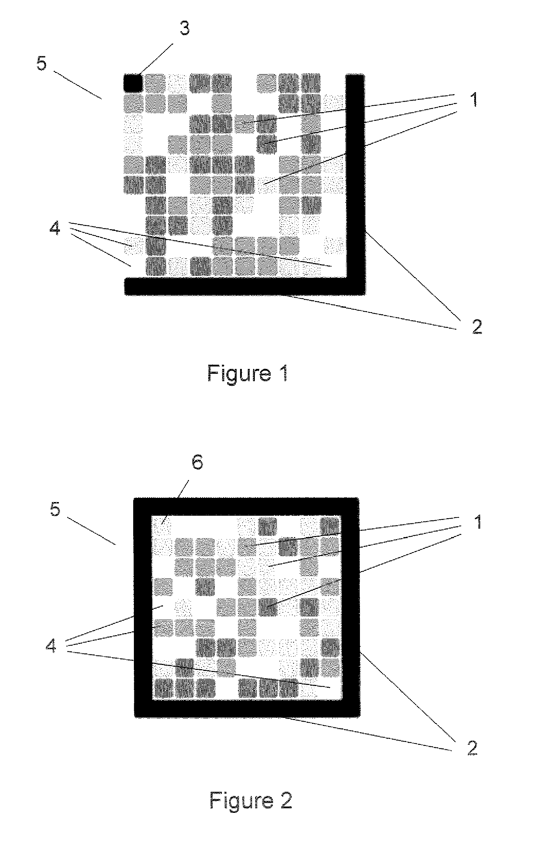

The invention will now be described further with reference to figures 1 to 5.

Figures 1 to 5 show examples of multi-dimensional bar codes according to the present invention.

The bar code is configured to be captured by a camera of a reading apparatus that is preferably mobile, such as a mobile phone handset using appropriate software. The bar code is preferably square (i.e. having an aspect ratio of 1:1) to allow suitable capture of the entire image by a camera regardless of whether it is held in a vertical or horizontal orientation.

The bar code comprises colour regions 1 formed of a plurality of elements as shown in figure 1. These colour regions 1 are used to represent encoded data, allowing a relatively high capacity code for direct data encoding. The data may be protected by error correction and/or may be encrypted. The colour regions 1 therefore vary in wavelength, for example elements in the red, green and blue spectra can be provided. Identification regions 2, which are distinguishable from the colour regions 1, are provided in the form of black identification bars which define two edges of the bar code. The identification regions 2 and the colour regions 1 are distinguishable from one another due to the selection of an appropriate parameter (such as light intensity, wavelength, reflectance, or the negative equivalents of these), and an appropriate selection of a value of that parameter. The parameter value of the colour regions 1 will exceed the parameter threshold value, while the parameter value of the identification regions 2 will not. This allows quick and accurate detection of the bar code by a bar code reading apparatus.

The identification regions 2 need not be black, but must be distinguishable according to a chosen parameter, from the colours used for the colour regions 1 to represent the encoded data. The bar code can, for example, be provided with negated white and black regions for distinguishing the bar code on a dark screen.

The bar code is read by a reader that has a camera for capturing an image of the bar code. Once an image has been captured, the reader applies threshold processing using suitable algorithms, in order to detect and identify the identification regions. The reader then employs identification processing to identify the bar code, based on the outcome of the threshold processing. The bar code is then decoded and the decoded data is retrieved.

In the example of figure 1, the identification regions 1 also serve as orientation regions that are distinguished from the one or more colour regions upon the application of suitable threshold processing, so that, upon the application of suitable orientation processing, the relative orientation of the bar code and an apparatus for reading the bar code can be determined. In this case, where the identification regions are also orientation regions, the threshold processing that is used to identify the bar code is also used to orientate the bar code, so that a single threshold processing step is required by the reader to quickly and accurately identify and then orientate the bar code.

A distortion correction reference region such as a distortion correction element 3 is also provided. The distortion correction element 3 of figure 1 is preferably provided as a black square in a corner of the bar code, diagonally opposite a corner at which the two edges defined by the identification regions meet. The distortion correction element 3 preferably has a value of the distinguishing parameter that is the same as that of the identification regions 2, for example if the identification regions 2 are black the distortion correction element 3 is preferably also black, in order that the distortion correction element 3 is quickly recognised by the reader as such using a similar thresholding technique. The distortion correction element 3 is used as a reference element to allow the reader and associated algorithms to recognise any distortion of the image, so that this can then be corrected to provide a more accurate bar code image for analysis. Light and colour adjustors 4 are also provided to allow appropriate colour identification of the data during analysis of the bar code (i.e. subsequent to the initial identification of the bar code via the identification regions). A plurality of distortion correction elements 3 and light and colour adjustors 4 can be provided, depending on factors such as the complexity of the bar code. An advantage in providing a plurality of distortion correction elements 3 and light and colour adjustors 4 is that these can be spaced at various points across the bar code to allow for consistent analysis of the bar code. A quiet zone 5 surrounds the bar code, thereby defining its extremities.

Figure 2 shows an example of a bar code in which the identification regions 2 fully surround the perimeter of the bar code. In such a case, identification of the bar code using threshold processing is again achieved in an efficient manner. However, in this case the symmetry of the identification regions 2 is such that the identification regions 2 cannot aid in the orientation of the bar code. A subsequent orientation processing step is therefore required, for example by using an additional parameter threshold value, such as colour (wavelength) or brightness using one or more of the remaining elements or regions of the bar code. For example, orientation processing can act to rotate the reader relative to the bar code until a predetermined orientation element 6, which is green, is identified in the top left hand corner of the bar code, signifying that the bar code is correctly orientated with respect to the reader.

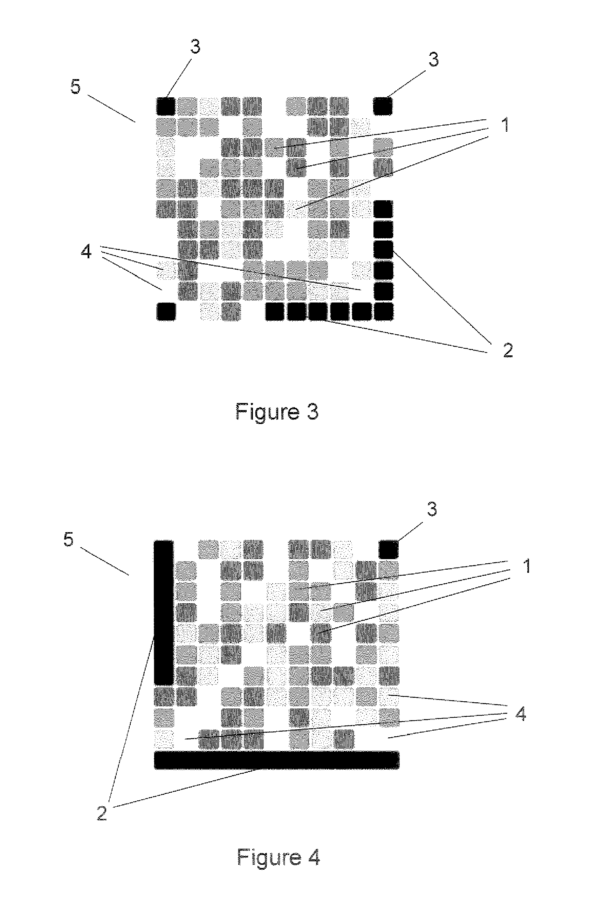

In the example of figure 3, an arrangement of single elements that are the same size and shape as the colour elements, are provided as identification regions 2. Figure 3 additionally shows how a plurality of spaced distortion correction elements can be provided to aid not only distortion correction during the subsequent analysis of the bar code, but also the initial identification of the bar code.

Figure 4 provides a further example of a bar code in which the identification regions 2 are spaced from one another, such that a number of regions define different extents of selected edges of the bar code. The size and positioning of the identification and the orientation regions will of course depend on a number of factors such as the size and complexity of the bar code, and the requirements of the associated reader software.

A preferred reader takes the form of a mobile phone handset in which appropriate software is installed to allow the handset to function as described above. Alternatively, a portable hardware device with a camera and a microprocessor with appropriate software can be employed.

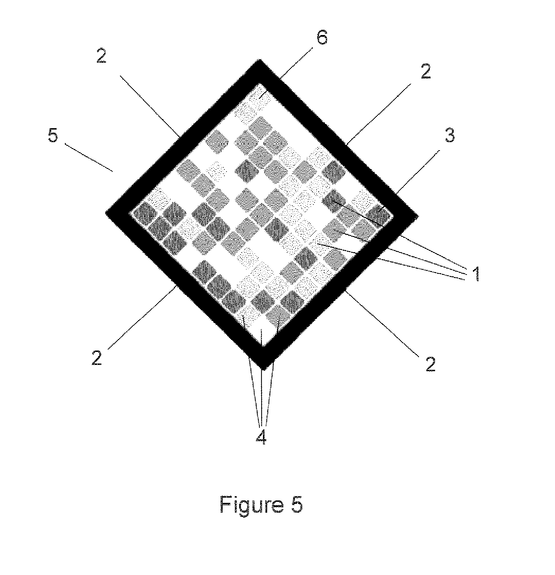

Orientation regions are preferable in bar codes that are likely to be presented at an angle to the reader, which in reality is likely in the case of a mobile reader. Figure 5 shows a substantially square bar code that is presented at a different angle of orientation to those shown in figures 1 to 4. By using threshold processing to identify the bar code, and additional processing to orientate the bar code (in this example via orientation element 6), the accurate relative orientation of the bar code and the reader (in this case the orientation of figure 2), can be achieved in an efficient manner.

The bar code can be provided on a variety of media, for example in the form of an image on a screen, or a print on paper or other material.

## Claims

1. A multi-dimensional bar code comprising:
one or more colour regions, said one or more colour regions representing encoded data and being arranged to provide light having a parameter value that exceeds a predetermined threshold value; and
one or more bar code identification regions arranged to provide light having a parameter value that does not exceed the predetermined threshold value,
such that the one or more identification regions are distinguished, upon the application of threshold processing, from the one or more colour regions, so that the bar code is identifiable by an apparatus for reading the bar code.

2. The multi-dimensional bar code according to claim 1, wherein the bar code comprises one or more orientation regions arranged to provide light such that they are distinguished, upon the application of orientation processing, from any remaining regions of the bar code, so that the relative orientation of the bar code and an apparatus for reading the bar code can be determined.

3. The multi-dimensional bar code according to claim 2, wherein one or more of the orientation regions are one or more of the identification regions.

4. The multi-dimensional bar code according to claim 2, wherein one or more of the orientation regions are one or more of the colour regions.

5. The multi-dimensional bar code according to any preceding claim, wherein the parameter is at least one of light intensity, wavelength, reflectance and contrast.

6. The multi-dimensional bar code according to any preceding claim, wherein the aspect ratio of the bar code is substantially 1:1.

7. The multi-dimensional bar code according to any preceding claim, the bar code further comprising one or more distortion correction reference regions.

8. The multi-dimensional bar code according to any preceding claim, the bar code further comprising one or more light intensity reference regions.

9. The multi-dimensional bar code according to any preceding claim, the bar code further comprising one or more colour reference regions.

10. The multi-dimensional bar code according to any preceding claim, wherein the one or more identification regions define at least one edge of the bar code.

11. An apparatus for reading a multi-dimensional bar code according to any preceding claim, the apparatus comprising:
image capturing means arranged to capture an image of the bar code;
threshold processing means arranged to apply threshold processing to the bar code, in order to detect the one or more identification regions;
identification processing means arranged to identify, based on an outcome of the threshold processing, the bar code; and
decoding means arranged to decode the bar code.

12. The apparatus for reading a multi-dimensional bar code according to claim 11, the apparatus comprising:
orientation processing means arranged to detect the one or more orientation regions and to determine a relative orientation of the bar code to the apparatus.

13. A method of reading a multi-dimensional bar code according to any of claims 1 to 10, the method comprising the steps of:
capturing an image of the bar code;
applying threshold processing to the bar code, in order to detect the one or more identification regions;
applying identification processing to identify, based on an outcome of the threshold processing, the bar code; and
decoding the bar code.

14. The method of reading a multi-dimensional bar code according to claim 13, the method further comprising the steps of:
applying orientation processing to detect the one or more orientation regions and to determine a relative orientation of the bar code to an apparatus for reading the bar code.

15. A method of generating a multi-dimensional bar code, the method comprising the steps of:
generating one or more colour regions, said one or more colour regions representing encoded data and being arranged to provide light having a parameter value that exceeds a predetermined threshold value; and
generating one or more identification regions arranged to provide light having a parameter value that does not exceed the predetermined threshold value,
such that the one or more identification regions are distinguished from the one or more colour regions, so that the bar code can be identified.

16. The method of generating a multi-dimensional bar code according to claim 14, the method further comprising the step of:
generating one or more orientation regions arranged to provide light such that they are distinguished, upon the application of orientation processing, from any remaining regions of the bar code, so that the relative orientation of the bar code and an apparatus for reading the bar code can be determined.
